# EUROPEAN PATENT APPLICATION

(11) **EP 3 181 269 A1**
(43) Date of publication of application: **21.06.2017**
(21) Application number: 15307063.6
(22) Date of filing: 18.12.2015
(51) Int. Cl.: B22D 19/06, B22D 19/14, B22D 23/06, B22F 3/26, B22F 7/08, C22C 1/10, B22D 27/04

(54) **METHOD OF REDUCING INTERMETALLIC OMPOUNDS IN MATRIX BIT BONDLINE BY REDUCED TEMPERATURE PROCESS**

(71) Applicant: VAREL EUROPE (Société par Actions Simplifiée), 64000 Pau (FR)
(72) Inventor: Thier, Olivier, 75012 Paris (FR); Dourfaye, Alfazazi, 75011 Paris (FR); Cuillier de Maindreville, 64000 Pau (FR); Cazalas, Yves, 65000 Tarbes (FR); Gallego, Gilles, 65420 Ibos (FR)
(74) Representative: Flodman, Anna

(57) **Abstract**

A method for manufacturing a matrix drill bit includes: placing a metallic blank within a casting assembly including a mold having an inner surface formed into a negative shape of facial features of the drill bit; loading powder into an annulus formed between the blank and the mold, the powder including at least one of: ceramic powder and cermet powder; placing a binder alloy into the casting assembly over the blank and the mold; protecting the binder alloy from oxidation; inserting the casting assembly, blank, powder, and binder alloy into a furnace; operating the furnace to heat the protected binder alloy to an infiltration temperature between solidus and liquidus temperatures thereof, thereby infiltrating the powder with the binder alloy and forming a bit body; removing the bit body from the furnace; and after removal, attaching cutters to blades of the bit body.

## Description

### BACKGROUND OF THE DISCLOSURE

### Field of the Disclosure

The present disclosure generally relates to a method of reducing intermetallic compounds in a matrix bit bondline by a reduced temperature process.

### Description of the Related Art

U.S. Pat. No. 5,000,273 discloses an infiltration alloy comprising about 5 to 65% by weight of manganese, up to about 35% by weight of zinc, and the balance copper. Preferably, the infiltration alloy comprises 20% by weight of manganese, 20% by weight of zinc, and the balance copper. The infiltration alloy is useful in the manufacture of matrix bodies such as matrix drill bit bodies. A method for the manufacture of a matrix body comprises forming a hollow mold for molding at least a portion of the matrix body, positioning diamond cutting elements in the mold, packing at least a part of the mold with a powder matrix material, infiltrating the matrix material with the novel infiltration alloy in a furnace to form a mass, and allowing the mass to solidify into an integral matrix body. Because the novel infiltration alloy permits infiltration to be carried out at temperatures below about 1050°C, many diamond cutting elements which begin to deteriorate at temperatures above 1000°C can be bonded without substantial degradation to the matrix body during the infiltration process, and there is no need to secure them to the matrix body in a subsequent brazing or mechanical bonding step.

U.S. Pat. No. 5,733,649 discloses a matrix powder for formation along with an infiltrant into a matrix for use as a wear element or for use in retaining at least one discrete hard element. The matrix powder including macrocrystalline tungsten carbide particles, crushed sintered cemented macrocrystalline tungsten carbide particles, tungsten carbide, and an iron-based component.

U.S. Pat. No. 7,575,620 discloses a matrix powder that includes (a) about 15 weight percent of -325 Mesh cast tungsten carbide particles; (b) about 2 weight percent -325 Mesh particles comprising one or more of iron particles and nickel particles; (c) about 2 weight percent +60 Mesh macrocrystalline tungsten carbide particles; (d) about 6 weight percent - 60+80 Mesh macrocrystalline tungsten carbide particles; and (e) about 75 weight percent -80+325 Mesh hard particles. A portion of component (e) forms between about 10 weight percent and about 20 weight percent of the matrix powder. The portion of component (e) that is crushed cemented tungsten carbide particles containing one or more of cobalt and nickel within one of the following particle size ranges: (i) -80+120 Mesh hard particles; (ii) -120+170 Mesh hard particles; (iii) -170+230 Mesh hard particles; (iv) -230+325 Mesh hard particles; (v) -325 Mesh hard particles. The balance of component (e) is macrocrystalline tungsten carbide particles.

U.S. Pat. No. 8,973,683 discloses an apparatus and method for manufacturing a downhole tool that reduces failures occurring along a bondline between a cemented matrix coupled around a blank. The cemented matrix material is formed from a powder and a binder material. The blank includes an internal blank component and a coating coupled around at least a portion of the surface of the internal blank component. The internal blank component includes a top portion and a bottom portion. The internal blank component is substantially cylindrically shaped and defines a channel extending through the top portion and the bottom portion. The coating is a metal in some exemplary embodiments. The coating reduces the migration of the binder material into the blank thereby allowing the control of intermetallic compounds thickness within the bondline.

U.S. Pat. App. Pub. No. 2014/0131115 discloses an apparatus and method for manufacturing a downhole tool that reduces failures occurring along a bondline between a cemented matrix coupled around a blank. The cemented matrix material is formed from a tungsten carbide powder, a shoulder powder, and a binder material, wherein at least one of the tungsten carbide powder or the shoulder powder is absent of any free tungsten. The blank, which optionally may be coated, is substantially cylindrically shaped and defines a channel extending from a top portion and through a bottom portion of the blank. The absence of free tungsten from at least one of the tungsten carbide powder or the shoulder powder reduces the reaction with iron from the blank, thereby allowing the control and reduction of intermetallic compounds thickness within the bondline.

U.S. Pat. App. Pub. No. 2014/0182948 discloses a copper, manganese, nickel, zinc and tin binder metal composition having a melting point of 1500°F (816°C) or less that includes zinc and tin at a sum weight of about 26.5% to about 30.5% in which zinc is at least about 12% and Sn is at least about 6.5%. The binder metal having a melting point of 1500°F (816°C) or less can be used at an infiltrating temperature of 1800°F (982°C) or less in forming drilling tools and tool components.

### SUMMARY OF THE DISCLOSURE

The present disclosure generally relates to a method of reducing intermetallic compounds in a matrix bit bondline by a reduced temperature process. In one embodiment, a method for manufacturing a matrix drill bit includes: placing a metallic blank within a casting assembly including a mold having an inner surface formed into a negative shape of facial features of the drill bit; loading powder into an annulus formed between the blank and the mold, the powder including at least one of: ceramic powder and cermet powder; placing a binder alloy into the casting assembly over the blank and the mold; protecting the binder alloy from oxidation; inserting the casting assembly, blank, powder, and binder alloy into a furnace; operating the furnace to heat the protected binder alloy to an infiltration temperature between solidus and liquidus temperatures thereof, thereby infiltrating the powder with the binder alloy and forming a bit body; removing the bit body from the furnace; and after removal, attaching cutters to blades of the bit body.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.
Figure 1 illustrates a casting assembly for manufacturing a drill bit, according to one embodiment of the present invention.
Figure 2 illustrates application of flux to binder for use of the casting assembly.
Figure 3 illustrates the casting assembly placed in a furnace for melting the binder.
Figure 4 illustrates the infiltrated body of the drill bit.
Figure 5 illustrates brazing of a cutter to a blade of the body.
Figure 6 illustrates the completed drill bit.

### DETAILED DESCRIPTION

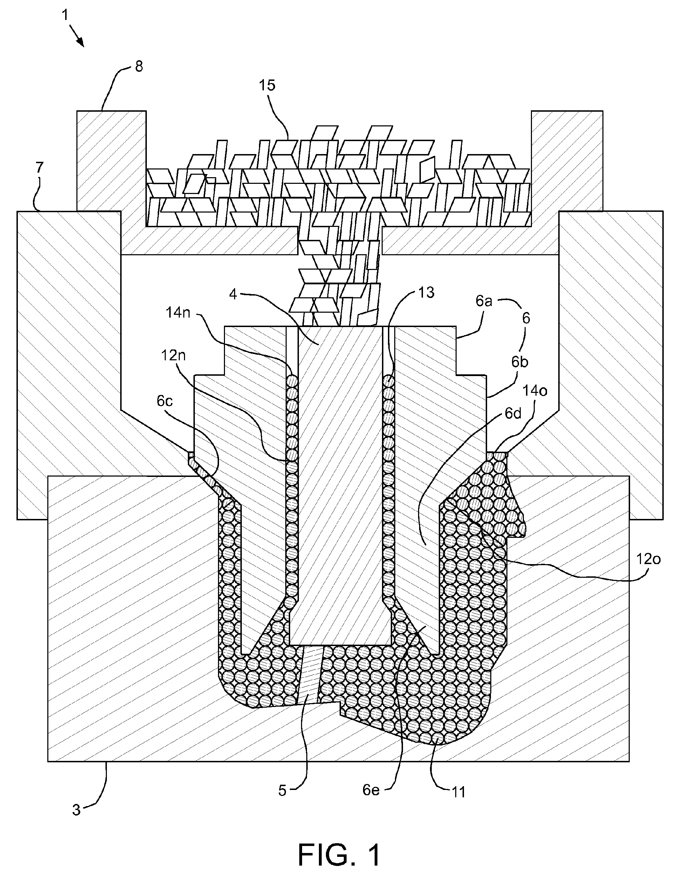

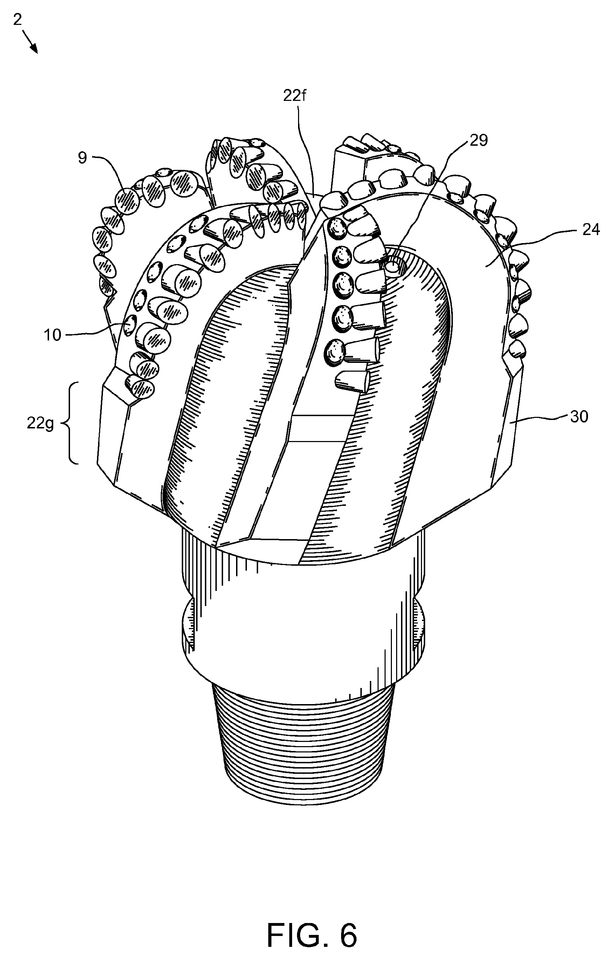

Figure 1 illustrates a casting assembly 1 for manufacturing a drill bit 2 (Figure 6), according to one embodiment of the present invention. The casting assembly 1 may include a thick-walled mold 3, one or more displacements, such as a stalk 4 and one or more nozzle displacements 5, a funnel 7, and a binder pot 8. Each of the mold 3, the displacements 4, 5, the funnel 7, and the binder pot 8 may be made from a refractory material, such as graphite, clay, or sand (including sand-based mixtures, such as green sand, oil-tempered sand, core sand, and sand resin). The mold 3 may be fabricated with a precise inner surface forming a mold chamber. The precise inner surface may have a shape that is a negative of what will become the facial features of the drill bit 2. The mold 3 may be manufactured by machining or 3D printing (aka additive manufacturing). The funnel 7 may rest atop the mold 3 and may be connected thereto, such as by a lap joint.

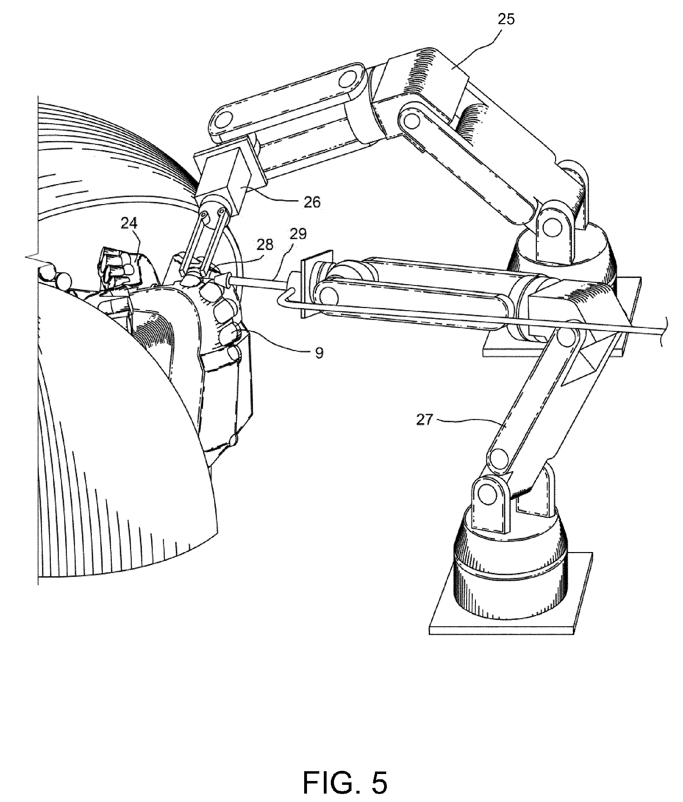

The displacements 4, 5 may be placed within the chamber of the mold 3. The nozzle displacements 5 may be positioned adjacent to a bottom of the mold chamber. The stalk 4 may be positioned within the center of the mold chamber adjacent to a top of the nozzle displacements 5. The stalk 4 may be removed after infiltration to form a bore and plenum of the drill bit 2. The nozzle displacements 5 may be removed after infiltration to form respective nozzle ports of the drill bit 2. The casting assembly 1 may further include a plurality of cutter displacements (not shown) disposed adjacent to the bottom of the mold chamber and the cutter displacements may be removed after infiltration to form pockets in blades of the drill bit 2 for receiving respective cutters 9 (Figure 5). The casting assembly 1 may further include a plurality of stud displacements (not shown) disposed adjacent to the bottom of the mold chamber and the stud displacements may be removed after infiltration to form pits in the blades of the drill bit 2 for receiving respective studs 10 (Figure 6).

Once the displacements 4, 5 have been placed, a blank 6 may be placed within the casting assembly 1. The blank 6 may be tubular and may be metallic, such as being made from steel. The blank 6 may be centrally suspended within the thick-walled mold 3 around the stalk 4 so that a bottom of the blank is adjacent to a bottom of the stalk. The blank 6 may have an upper portion 6a, an upper-mid portion 6b, a shoulder 6c, a lower-mid portion 6d, and a lower portion 6e. The upper-mid portion 6b may have an enlarged outer diameter relative to the upper portion 6a. The a lower-mid portion 6d may have a reduced outer diameter relative to the upper-mid portion 6b. The shoulder 6c may be conical for transitioning from the enlarged outer diameter of the upper-mid portion 6b to the reduced outer diameter of the lower-mid portion 6d. The lower portion 6e may have a conical inner surface. The blank 6 may be disposed in the mold 3 in an uncoated condition.

Once the displacements 4, 5 and the blank 6 have been positioned within the thick-walled mold 3, body powder 11, may be loaded into the thick-walled mold 3 to fill most of the mold chamber. The loading may include pouring of the body powder 11 into the mold 3 while compacting thereof, such as by vibrating the mold. The loading may continue until the body powder 11 in an outer annulus formed between the mold 3 and the blank 6 reaches an outer level 12o and the body powder in an inner annulus formed between the blank and the stalk 4 reaches an inner level 12n. The outer level 12o may be adjacent to a bottom of the shoulder 6c. The outer level 12o may be slanted (shown) or straight (not shown). The slant of the outer level 12o may be downward away from the blank 6 and toward the inner surface of the mold 3. The inner level 12n may be straight and may be above the outer level 12o. A portion of the body powder 11 in the inner annulus may extend into a chamber of the funnel 7.

The body powder 11 may be a ceramic, a cermet, or a mixture of a ceramic and a cermet. The ceramic may be a carbide, such as tungsten carbide, and may be cast and/or macrocrystalline. The cermet may include a carbide, such as tungsten carbide, cemented by a metal or alloy, such as cobalt. The body powder 11 may also be a mixture of powders having various mesh sizes. The body powder 11 may or may not also include a nominal amount of free metal powder.

Once loading of the body powder 11 has finished, shoulder powder 13 may be loaded into the mold 3 onto a top of the body powder 11 to fill the remaining mold chamber. The loading may continue until the shoulder powder 13 in the outer annulus reaches an outer level 14o and the shoulder powder in the inner annulus reaches an inner level 14n. The outer level 14o may be adjacent to a top of the shoulder 6c and the inner level 14n may be adjacent to an interface between the upper portion 6a and the upper mid-portion 6b. The shoulder powder 13 may be a metal or alloy, such as the metal component of the ceramic of the body powder 11. For example, if the body powder is tungsten carbide ceramic and/or tungsten carbide-cobalt cermet, then the shoulder powder 13 would be tungsten.

Once loading of the shoulder powder 13 has finished, the binder pot 8 may be rested atop the funnel 7 and may be connected thereto, such as by a lap joint. The binder pot 8 may have a cavity formed therein and a sprue formed through a bottom thereof providing communication between the cavity and the funnel chamber. Binder 15 may then be placed into the cavity and through the sprue of the binder pot 8. The binder 15 may be in the form of pellets or chunks. The binder 15 may be an alloy, such as a copper based alloy. The copper based alloy may include, by weight: 35-65% copper, 20-30% manganese, 10-20% nickel, and 5-15% zinc. A quantity of the binder 15 placed may be determined based on a quantity of the powders 11, 13 used, such as a weight of binder applied equals a binder factor times the sum of the total weight of the powders 11, 13 and a weight of the binder. Rearranging the equation, a weight of binder 15 applied equals the binder factor times the total weight of the powders divided by the difference between one and the binder factor. The binder factor may be between 40% and 70%.

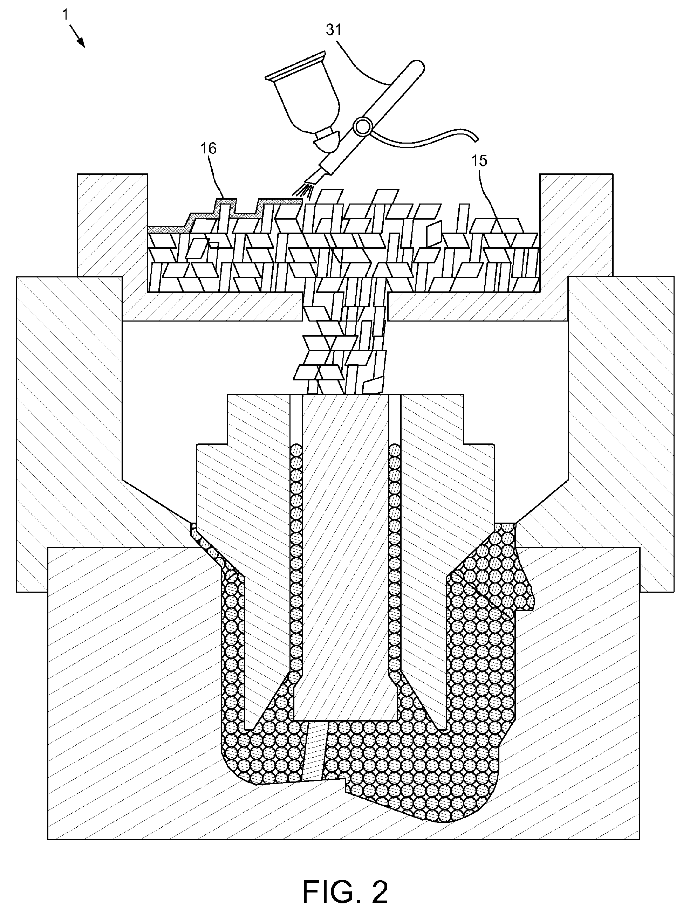

Figure 2 illustrates application of flux 16 to the binder 15 for use of the casting assembly 1. Once the binder 15 has been placed into the binder pot 8, flux 16 may be applied to the binder for protection of the binder from oxidation during infiltration. The flux may be applied as a powder using a sprayer 31, such as an airbrush (shown) or a spray gun (not shown). The flux 16 may have a working (aka activation) temperature range with a minimum working temperature less than a solidus temperature of the binder 15 and a maximum working temperature greater than a liquidus temperature of the binder 15. The flux 16 may include, by weight: 25-92.5% boric acid, 2.5-25% potassium tetraborate, 2.5-25% dipotassium hexafluorosilicate, and 2.5-25% disodium tetraborate decahydrate. A quantity of the flux 16 applied may be determined based on a quantity of the powders 11, 13 used, such as a weight of flux applied equals a flux factor times the total weight of the powders 11, 13. The flux factor may be between 0.1 % and 10%.

Alternatively, the flux 16 may be manually applied, such as by sprinkling the flux powder over the binder 15. Alternatively, the flux 16 may be made into a paste by mixing flux powder with water and a nominal amount of detergent and the flux may be applied to the binder 16 using a brush. Alternatively, the flux 16 may be applied to the binder 15 before placement into the binder pot 8, such as by placing the binder into a tray containing the flux paste or powder and mixing the binder with the flux. The flux-coated binder may then be placed into the binder pot 8.

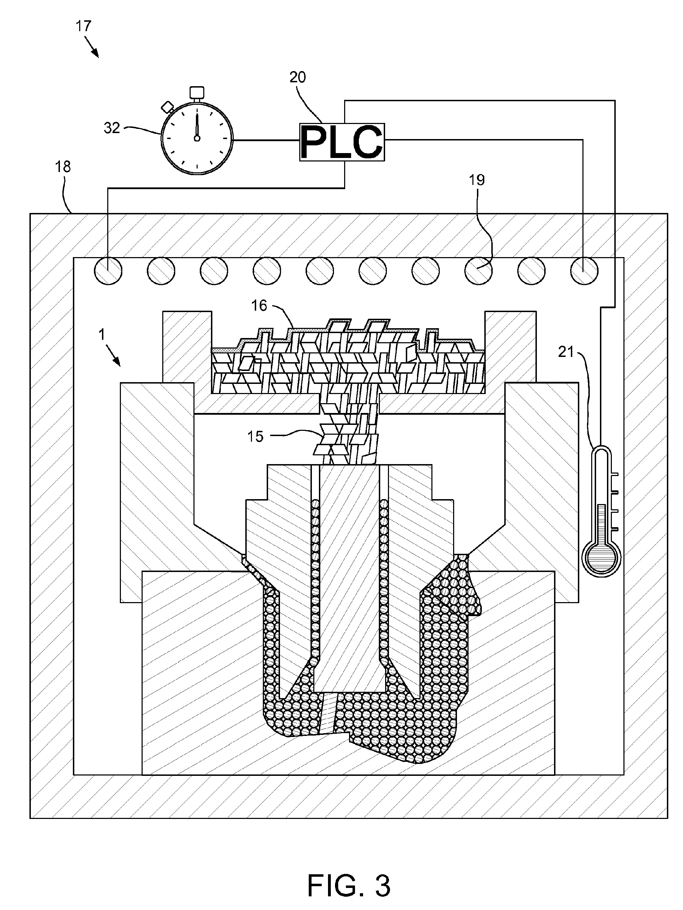

Figure 3 illustrates the casting assembly 1 placed in a furnace 17 for melting the binder 15. The furnace 17 may include a housing 18, a heating element 19, a controller, such as programmable logic controller (PLC) 20, a temperature sensor 21, and a power supply (not shown). The furnace 17 may be preheated to an infiltration temperature. The infiltration temperature may be between the solidus temperature and the liquidus temperature of the binder 15, such as between 950°C and 1061°C or between 1000°C and 1050°C. As used herein, the solidus and liquidus temperatures of the binder 15 refer to the respective temperatures determined using an uncontrolled atmosphere, such as an air atmosphere.

Alternatively, the infiltration temperature of the binder 15 may be between the solidus and a working temperature (equal to liquidus temperature plus about 100 °C) of the binder 15, such as between 950°C and 1180°C.

Once the flux 16 has been applied to the binder 15 and the furnace 17 has preheated to the infiltration temperature, the casting assembly 1, the blank 6, the powders 11, 13, and the binder 15 may be inserted into the furnace 17 and kept therein for an infiltration time 32, such as between 15 and 200 minutes. The PLC 20 may maintain the temperature in the furnace 17 at the infiltration temperature for the infiltration time 32. The atmosphere in the furnace 17 during infiltration may be uncontrolled, such as air. As the casting assembly 1 is heated by the furnace, the binder 15 may melt and flow into the powders 11, 13 through the sprue of the binder pot 8. The molten binder may infiltrate powders 11, 13 to fill interparticle spaces therein. A sufficient excess amount of binder 15 may have been loaded into the binder pot 8 such that the molten binder fills a substantial portion of the funnel volume, thereby creating pressure to drive the molten binder into the powders 11, 13.

Even though the infiltration temperature may be less than the liquidus temperature of the binder 15, protection of the binder by the flux 16 may effectively lower the liquidus temperature thereof such that the binder 15 melts as though the binder has been heated to a temperature greater than the liquidus temperature.

Alternatively, the binder 15 may be protected from oxidation during infiltration by placing the furnace 17 in a vessel and purging the vessel of air before infiltration. The vessel may be purged of air by creating a vacuum therein or by displacing the air therein with an inert gas, such as nitrogen.

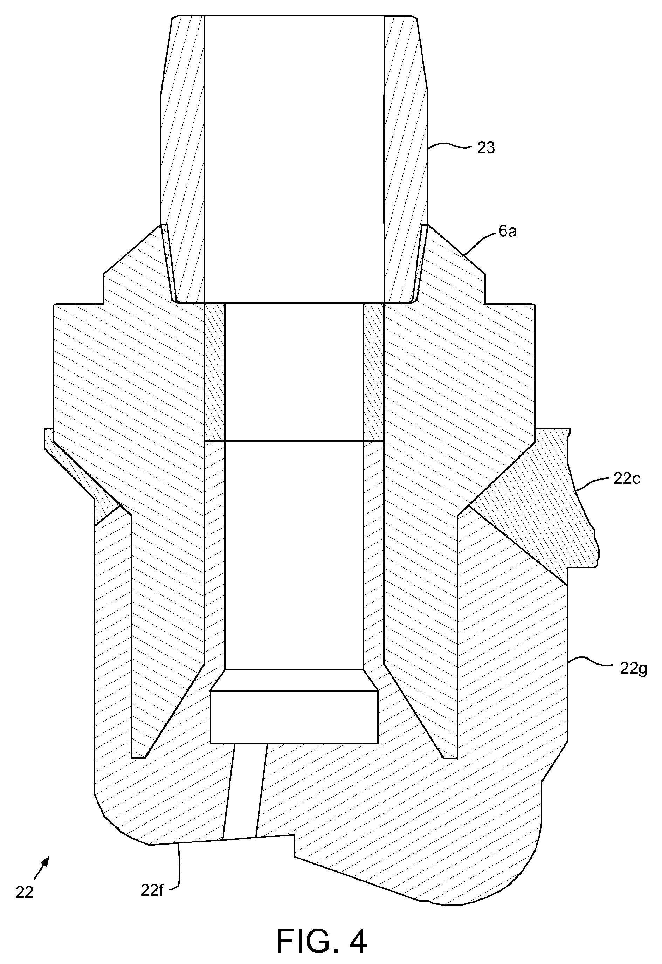

Figure 4 illustrates the infiltrated body 22 of the drill bit 2. Once the binder 15 has infiltrated the powders 11, 13, the casting assembly 1 may be controllably cooled, such as by remaining in the furnace 17 with the heating element 19 shut off. Upon cooling, the binder 15 may solidify and cement the particles of the powders 11, 13 together into a coherent integral body 22 having a face 22f and gage section 22g made from the binder 15 and body powder 11 and a gage chamfer 22c made from the shoulder powder 13 and binder. The binder 15 may also bond the body 22 to the blank 6 thereby forming a bonding zone along outer surfaces of the shoulder 6c, lower mid-portion 6d, and lower portion 6e.

Advantageously, infiltration at a temperature less than or equal to the liquidus temperature of the binder 15 discourages the formation of brittle intermetallic compounds in the bonding zone which could otherwise lead to premature failure of the drill bit 2 during a drilling operation. Further, dissolution of the blank 6 by the molten binder is also discouraged. Further, dissolution of the shoulder powder material by the molten binder is discouraged. Further, strength of the bit body 22 is increased. Further, porosity in the bit body 22 is discouraged by better wetting of the molten binder to the body powder 11. Further, power consumption by the furnace 17 during infiltration is reduced. Further, productivity is increased.

Once cooled, the casting assembly 1 may be removed from the furnace 17. The mold 3, funnel 7, and binder pot 8 may then be broken away from the body 22. A thread may be formed in an inner surface the upper portion 6a and a threaded tubular stud 23 screwed therein, thereby forming the shank 6a, 23. A chamfer may also be formed in an outer surface of the upper portion 6a.

Additionally, the stud 23 may be welded (not shown) to the upper portion 6a after screwing the stud therein. Alternatively, the casting assembly 1 may be removed from the furnace 17 before cooling and covered with a thermal blanket for controlled cooling thereof. Alternatively, the threading of the blank 6 and chamfering thereof may be performed after brazing.

Figure 5 illustrates brazing of the cutter 9 to a blade 24 of the body 22. Once the stud 23 has been screwed into the blank 6, a first robot arm 25 may use a capture tool 26 to grasp the cutter 9 from a tray (not shown) of cutters. The cutter 9 may be superhard, such as being a polycrystalline diamond compact (PDC) cutter. The first robot arm 25 may transport the cutter from the tray to a respective pocket (formed by the respective cutter displacement) in a respective blade 24. The first robot arm 25 may also hold and spin the cutter 9 within the respective pocket during the brazing operation. Once the cutter 9 has been delivered to the respective pocket, a second robot arm 27 may apply a brazing material 28 to the respective pocket using an applicator 29. Once the brazing material 28 has been applied to the pocket, the applicator 29 may be released from the second robot arm 27 and replaced with a heater (not shown), such as a blow torch or induction coil. The second robot arm 27 may position and hold the heater adjacent to the applied brazing material 28 while the heater is operated to melt the braze material. Cooling and solidification of the brazing material 28 may attach the cutter 9 to the respective blade 24. The brazing operation may then be repeated until all of the cutters 9 have been attached to the respective blades 24. The brazing operation may also be repeated for attaching the studs 10 to the respective blades.

Alternatively, the cutters 9 and/or studs 10 may be manually brazed to the respective blades 24. Alternatively, the cutters 9 and/or studs 10 may be attached to the respective blades 24 by interference fit instead of brazing. Alternatively, the studs 10 may be omitted.

Figure 6 illustrates the completed drill bit 2. Once the cutters 9 have been attached to the respective blades 24, a nozzle 29 may be inserted into the each nozzle port and connected to the bit body 22. To connect the nozzle 29, the nozzle port may be threaded or the nozzle 29 may be interference fit into the nozzle port. Although only one nozzle and nozzle port are shown, the drill bit 2 may include two or more nozzles 29 and nozzle ports, such as a nozzle port formed adjacent to each fluid course of the bit body 22.

The bit body 22 may include a plurality of blades 24 formed in the face 22f thereof and some of the blades may extend from a center of the face and some of the blades may extend from an intermediate portion of the face. The blades 24 may each extend to the gage section 22g and may be integrally formed with respective gage pads 30 formed in the gage section. The blades 24 and gage pads 30 may have leading surfaces, trailing surfaces, and outer surfaces. The fluid courses may be formed between adjacent blades 24 and may be in communication with respective junk slots formed between adjacent gage pads 30. The cutters 9 may be attached along outer peripheries of the leading surfaces of the blades 24 and the studs 10 may be attached along the outer surfaces of the blades.

In operation (not shown), the drill bit 2 may be connected to a bottom of a drill string (not shown). The drill bit 2 may be rotated (counterclockwise when looking at the face 22f), such as by rotation of the drill string from a rig and/or by a drilling motor thereof, while drilling fluid, such as mud, may be pumped down the drill string to the bore of the drill bit. The drilling fluid may continue through the bore to the plenum and be distributed to the ports. The drilling fluid may be discharged by the nozzles 29 in the ports and carry cuttings from the blades 24, along the fluid courses and junk slots, and up an annulus formed between the drill string and the wellbore.

While the foregoing is directed to embodiments of the present disclosure, other and further embodiments of the disclosure may be devised without departing from the basic scope thereof, and the scope of the invention is determined by the claims that follow.

## Claims

1. A method for manufacturing a matrix drill bit, comprising:
placing a metallic blank within a casting assembly comprising a mold having an inner surface formed into a negative shape of facial features of the drill bit;
loading powder into an annulus formed between the blank and the mold, the powder comprising at least one of: ceramic powder and cermet powder;
placing a binder alloy into the casting assembly over the blank and the mold;
protecting the binder alloy from oxidation;
inserting the casting assembly, blank, powder, and binder alloy into a furnace;
operating the furnace to heat the protected binder to an infiltration temperature between solidus and liquidus temperatures thereof, thereby infiltrating the powder with the binder and forming a bit body;
removing the bit body from the furnace; and
after removal, attaching cutters to blades of the bit body.

2. The method of claim 1, wherein the infiltration temperature is between 950°C and 1061°C.

3. The method of claim 2, wherein the infiltration temperature is between 1000°C and 1050°C.

4. The method of claim 1, wherein:
the binder is protected from oxidation by applying flux thereto, and
the furnace is operated in an uncontrolled atmosphere.

5. The method of claim 4, wherein the flux has a working temperature range with a minimum working temperature less than the solidus temperature and a maximum working temperature greater than the liquidus temperature.

6. The method of claim 4, wherein the flux includes, by weight: 25-92.5% boric acid, 2.5-25% potassium tetraborate, 2.5-25% dipotassium hexafluorosilicate, and 2.5-25% disodium tetraborate decahydrate.

7. The method of claim 4, wherein:
a weight of the flux applied equals to 0.1-10% times a weight of the powder, and
a weight of the binder alloy placed equals to 40-70% times a sum of the weight of the powder and the weight of the binder alloy.

8. The method of claim 1, wherein the cutters are attached to the bit body by brazing.

9. The method of claim 1, wherein the furnace is operated for an infiltration time between 15 minutes and 200 minutes.

10. The method of claim 1, wherein:
the powder is a body powder,
the method further comprises loading a shoulder powder into the annulus, and
the shoulder powder is a metal or alloy.

11. The method of claim 10, wherein the shoulder powder is the metal component of the ceramic of the body powder.

12. The method of claim 1, wherein the binder alloy is copper based.

13. The method of claim 12, wherein the copper based alloy includes, by weight: 35-65% copper, 20-30% manganese, 10-20% nickel, and 5-15% zinc.

14. The method of claim 1, wherein the blank is made from steel.

15. A matrix drill bit manufactured according to the method of claim 1.
